# EUROPEAN PATENT APPLICATION

(11) **EP 0 930 151 A2**
(43) Date of publication of application: **21.07.1999**
(21) Application number: 99200006.7
(22) Date of filing: 02.01.1999
(51) Int. Cl.: B29D 7/01, B29C 47/88

(54) **Plastic film production plant**

(30) Priority: 14.01.1998 IT MI980041
(71) Applicant: Pentacast S.r.l., 86077 Pozzilli, Isernia (IT)
(72) Inventor: Brambilla, Giuseppe, 28100 Novara (IT); Bombonato, Marco, 86077 Pozzilli, Isernia (IT)
(74) Representative: Faraggiana, Vittorio, Dr. Ing.

(57) **Abstract**

A plastic film production plant comprises a film extrusion head (11) followed by film cooling rollers (13, 14). In accordance with the present invention the film emerging from the extrusion head wraps around the upper part of the first cooling roller.

## Description

The present invention relates to a plant for the production of plastic film of the type termed 'stretch'.

In known production plants the extruded film is started with cooling rollers which perform the dual function of extending the film to thin it to the desired thickness and cool it. After passage on one or two cooling rollers termed 'chill rolls' the film continues to the station of cutting, winding and unloading from the plant.

The action of the cooling rollers is very important for final product quality. Indeed, the extensibility of the stretch film, which is the qualifying parameter for its applicative function, depends on film cooling speed.

Cooling speed depends in turn on the temperature of the water inlet to the chill roll and the chill roll rotation speed. Extensibility increases with gradual cooling while it decreases with increasing chill roll speed.

Optimization of these two process variables makes it possible to obtain greater combination flexibility between productivity and product quality.

One problem arises from the fact that the film must necessarily adhere well to the chill rolls to permit them to adequately perform their function. Adhesion of the film to the roller depends however on roller cooling speed, i.e. the higher the cooling speed the greater the adhesion and this conflicts with the desire to cool the film slowly.

If chill roll temperature were increased with respect to presently used values leaving unvaried the other process variables, that is if gradual film cooling were employed in an attempt to increase extensibility, the film would detach from the chill roll surface because of the forces acting on it.

To obviate this problem there have been proposed for example rollers with electrostatic edge-holders to seek to keep the film adhering to the roller even with slow cooling. The results were however unsatisfactory because the electrostatic action degrades rapidly as film temperature increases.

The general purpose of the present invention is to obviate the above mentioned drawbacks by making available a production plant in which it would be possible to reduce film cooling speed while keeping the film adequately adherent to the chill rolls.

In view of this purpose it was sought to make available in accordance with the present invention a plastic film production plant comprising a film extrusion head followed by film cooling rollers characterized in that the film emerging from the extrusion head winds on the upper part of the first cooling roller.

To clarify the explanation of the innovative principles of the present invention and its advantages compared with the prior art there is described below with the aid of the only annexed drawing a possible embodiment thereof by way of non-limiting example applying said principles.

The present invention arises from the observation that the present process technology calls for high arrangement of the extrusion head. In other words, known plants have the extrusion head arranged above the chill rolls. In this manner the extruded film falls from above on the chill rolls to wind on the lower side of the first roller. The adhesion force of the film to the roller must therefore oppose both centrifugal and gravitational force.

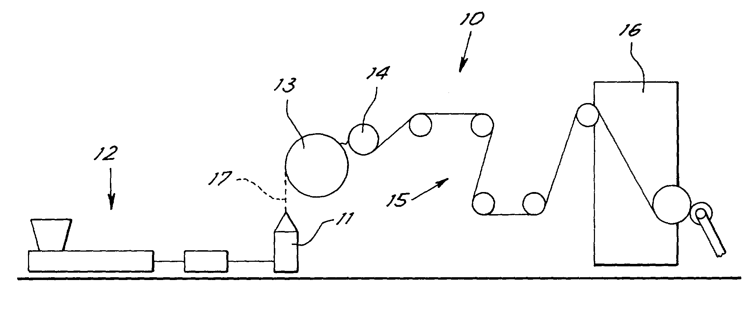

As shown in the figure, a film production plant indicated generically by reference number 10 comprises an extrusion head 11 fed by a known melting and coupling unit 12. The head 11 is followed by cooling rollers, or chill rolls, 13, 14, stabilizing rollers 15 and a known cutting, winding and unloading unit.

The various above mentioned members are of essentially known type in themselves and readily imaginable by those skilled in the art and will therefore not be further described or shown in detail.

In accordance with the innovative principles claimed here the film 17 emerging from the extrusion head encounters the first cooling roller to wind upon the upper part of said first roller in contrast with the instructions of the prior art in accordance with which upward extrusion is also deemed disadvantageous.

In this manner the film is supported by the first chill roll and then can undergo slow cooling without risk of detachment from the heat exchange surface.

Advantageously the extrusion head is arranged below said first roller and with extrusion mouth turned towards it with resulting reversal of flow of the sheet with respect to the prior art. This maximizes the adhesion effect of the film to the first roller 14. Also advantageously the film arrives on the roller at a tangent between +-50° with respect to the vertical and winds on the roller for at least 90° and preferably at an angle between 90° and 180°.

It has been found that this arrangement also permits best employment of the second heat exchange roller 14 which in known plants does not fully perform its exchange function because of the above mentioned adhesion problems.

In addition the weight of the film upstream of the first roller discharges more on the cooler sections of film contrary to the prior art. It has been found surprisingly that this improves the characteristics of the final product.

At this point it is clear that the preset purposes have been achieved. It has been found that with a plant realized in accordance with the present invention it is possible to obtain greater productivity and product quality.

Naturally the above description of an embodiment applying the innovative principles of the present invention is given by way of non-limiting example of said principles within the scope of the exclusive right claimed here.

For example the number of intermediate rollers and passages of the film could vary in accordance with specific production exigencies.

## Claims

1. Plastic film production plant comprising a film extrusion head followed by film cooling rollers characterized in that the film emerging from the extrusion head wraps on the upper part of the first cooling roller.

2. Plant in accordance with claim 1 characterized in that the extrusion head is arranged below said first roller and with extrusion mouth turned towards said first roller.

3. Plant in accordance with claim 2 characterized in that the film arrives on the roller at a tangent between +-50° with respect to the vertical.

4. Plant in accordance with claim 3 characterized in that the film winds on the roller for at least 90° and preferably for not more than 180°.
